# EUROPEAN PATENT SPECIFICATION

(11) **EP 2 303 647 B1**
(45) Date of publication and mention of the grant of the patent: **10.04.2013**
(21) Application number: 09766181.3
(22) Date of filing: 08.06.2009
(51) Int. Cl.: B60R 25/10, G07C 9/00, G08B 25/01

(54) **SIGNALLING SYSTEM AND METHOD FOR ANTI-THEFT SYSTEMS FOR A MOTOR VEHICLE**
WARNSYSTEM UND VERFAHREN FÜR DIEBSTAHLSICHERUNGSSYSTEM FÜR EIN KRAFTFAHRZEUG
APPAREIL ET PROCÉDÉ DE SIGNALISATION POUR SYSTÈMES ANTIVOL DE VÉHICULES MOTORISÉS OU SIMILAIRES

(30) Priority: 18.06.2008 IT MO20080176
(43) Date of publication of application: 06.04.2011
(73) Proprietor: Meta System S.p.A., 42124 Reggio Emilia (IT)
(72) Inventor: SIMONAZZI, Giuseppe, I-42100 Reggio Emilia (IT)
(74) Representative: Brunacci, Marco
(86) International application number: PCT/IB2009/005876
(87) International publication number: WO 2009/153639

(56) References cited:
- DE-A1-102004 002 928
- DE-A1-102007 030 608
- US-A1- 2005 064 895

## Description

### Technical Field

The present invention relates to a signalling apparatus and method for anti-theft systems of motor vehicles or the like.

### Background Art

The use is known on motor vehicles of anti-theft systems suitable for detecting and signalling undesired breaking into vehicle compartments and/or tampering with the motor vehicle in general.

The known anti-theft systems generally comprise an operating and control unit, installed inside the compartment of the motor vehicle, to which are connected one or more break-in or theft detection devices.

The detection devices can be made up, e.g., of suitable switches arranged inside the engine compartment and suitable for detecting the opening of the bonnet, of ultrasonic sensors distributed inside the vehicle compartment and suitable for detecting any break-ins or, again, of anti-lifting sensors suitable for regularly measuring the inclination of the vehicle and signalling any theft by lifting.

The unit is also connected to an acoustic signalling apparatus, commonly made up of an electric siren installable inside the engine compartment.

The use is also known of particular signalling apparatus in which the operating and control unit is associated with communication devices, made up of a GSM transmitter/receiver.

In case of theft of the motor vehicle, an alarm signal is transmitted by means of the GSM transmitter, signal that can be received by a remote processing unit or else directly by the mobile phone of the motor vehicle owner.

Such signalling apparatus can also consist in a further GPS module or the like, associated with the operating and control unit and able to determine and indicate the position of the motor vehicle.

In this case, following the theft of the motor vehicle, the alarm signals sent by means of the GSM transmitter comprise the geographic latitude and longitude coordinates of the motor vehicle.

The known signalling apparatus, however, do have some drawbacks.

Particular devices are in fact known for disturbing GSM signals or other second and third generation mobile phone standards, which, if used during the theft of a motor vehicle, allow blocking the alarm signal transmitted by means of the communication device.

Such devices, in point of fact, emit a disturbance signal operating within the spectrum of the frequencies used by mobile phone standards and which, therefore, is superimposed on the alarm signal transmitted by the communication device of the anti-theft system.

The documents DE 10 2007 030 608 A, US 2005/0064895 A and US 2006/00711783 A disclose communication systems for vehicles comprising short-range communication devices.

The document DE 10 2007 030 608 A is considered to be the closest prior-art document. However, even these known systems can be improved.

### Object of the Invention

The main aim of the present invention is to provide a signalling apparatus and method for anti-theft systems of motor vehicles or the like that ensures the transmission of an alarm signal in case of theft of a motor vehicle or following tampering with the motor vehicle in general.

Another object of the present invention is to provide a signalling apparatus and method for anti-theft systems of motor vehicles or the like that allows overcoming the mentioned drawbacks of the state of the art Within the ambit of a simple, rational, easy and effective-to-use and low-cost solution. The above objects are achieved by the present signalling apparatus and method systems of motor vehicles or the like, according to the present claims 1 and 9. characterised in that it comprises the phases of:
- checking the connection between said transmission/receiver system and said remote control unit;
- in case of absence of connection between said transmission/receiver system and said remote control unit, said sending phase comprises the transmission of said alarm signal by means of a short-range transmission/receiver unit.

### Brief Description of the Drawings

Other characteristics and advantages of the present invention will become more evident from the description of a form of preferred, but not sole, embodiment, of a signalling apparatus and method for anti-theft systems of motor vehicles or the like, illustrated purely as an example but not limited to the annexed drawing in which:

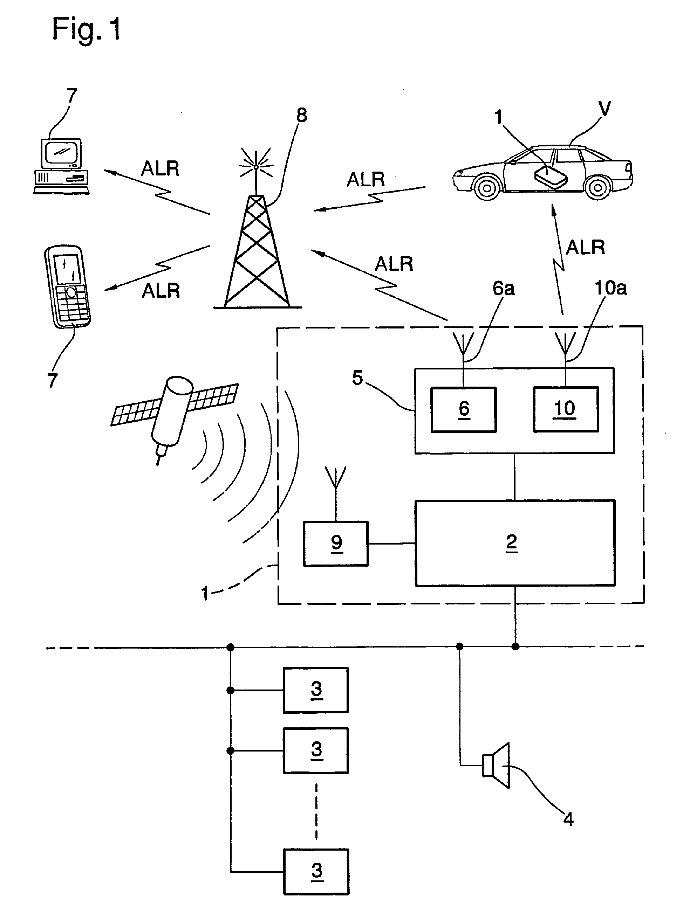

Figure 1 is a general diagram showing the apparatus according to the invention. Embodiments of the Invention

With particular reference to such figure, a signalling apparatus usable in anti-theft systems installable on motor vehicles or the like has been globally indicated by 1.

The apparatus 1 comprises an operating and control unit, shown in figure 1 by the reference 2 and installable, e.g., inside the compartment of a motor vehicle.

The operating and control unit 2 can be associated with a plurality of detection devices 3 installed on board the vehicle, of the type of opportune switches arranged inside the engine compartment and suitable for detecting the opening of the bonnet, of ultrasonic sensors distributed inside the compartment and suitable for detecting any intrusions or, again, of anti-lifting sensors suitable for regularly measuring the inclination of the motor vehicle and signalling any theft by lifting.

Furthermore, the operating and control unit 2 can be connected to an electric siren 4 suitable for emitting an acoustic alarm signal in case of the detection of vehicle theft or undesired access inside the compartment. In particular, the electric siren 4 can be of the type commonly used in anti-theft systems and can be installed inside the engine compartment of the motor vehicle.

The apparatus 1 comprises radio-wave communication means, schematised in figure 1 and generally indicated by the reference 5, which are suitable for sending an alarm signal ALR towards one or more remote control units 7 in the event of the theft being detected of the motor vehicle or undesired access into the compartment.

In particular, the communication means 5 comprise a transmission/receiver system 6 operating with mobile phone protocols such as GSM, GPRS, UMTS or the like and suitable for transmitting and receiving data to/from the remote control unit 7 by means of a first antenna 6a.

By remote control unit 7 is meant any type of electronic device which, through a radio channel made up, e.g., of one or more transceivers 8 of the GSM, GPRS, UMTS type or the like, is able to communicate with the operating and control unit 2 for the remote control of the motor vehicle. This remote control unit 7 can be made up, e.g., of a simple mobile phone able to communicate with the operating and control unit 2 by means of the conventional data transmission protocols or from a personal computer linked to a communication network and having a dedicated software program.

Usefully, the alarm signal ALR sent by the communication means 5 and received by the remote control unit 7 comprises a univocal motor vehicle identification code.

The apparatus 1 also comprises a motor vehicle position locating unit, shown schematically in figure 1 and indicated by the reference 9, which can have, e.g., a satellite signal receiver of the type used in satellite navigation systems Global Positioning System (GPS), Galileo Positioning System or the like.

The possibility cannot however be ruled out of connecting the operating and control unit 2 of the apparatus 1 to a locating unit 9 of the conventional type and installable separately on the motor vehicle. Such locating unit 9 can be made up, e.g., of a satellite navigator of known type.

Usefully, the presence of the locating unit 9 allows sending an alarm signal ALR that comprises the geographical coordinates of the motor vehicle, thus making it possible to detect the position of the motor vehicle after the theft. Advantageously, the communication means 5 also comprise a short range transmission/receiver unit, shown schematically in figure 1 and indicated by the reference 10, suitable for intervening in case of communication being impossible with the transmission/receiver system 6.

Such a possibility could occur, e.g., in the event of particular devices being used to disturb the GSM signals or of other mobile phone standards, devices usable in general for preventing the sending of alann signals ALR during the theft of a motor vehicle. Such devices, in fact, emit a signal that operates within the spectrum of the frequencies used by mobile phone standards and which, therefore, superimposes itself over the alarm signal transmitted by the transmission/receiver system 6.

In particular, the operating and control unit 2 comprises checking means suitable for periodically checking the presence of the radio connection between the transmission/receiver system 6 and the remote control unit 7.

In case of there being no connection, the short-range transmission/receiver unit 10 starts operating outside any disturbed frequencies and permits a short-range transmission of the alarm signal ALR towards one or more different apparatus 1 installed on other motor vehicles V in transit or parked in the vicinity.

The short-range transmission/receiver unit 10 can operate, e.g., within the band of frequencies from 315 MHz to 869 MHz, selected according to the country in which the apparatus 1 is used and to the relevant applicable standards. Alternatively, the short-range transmission/receiver unit 10 can operate using known short-range communication frequencies and protocols, such as Bluetooth, WiFi or the like.

The short-range transmission/receiver unit 10 has a second antenna 10a dedicated to the short-range transmission and receiving of the ALR alarm signal.

A particular embodiment of the method according to the invention is described below.

The method comprises a first phase of detection of motor vehicle theft, of breaking into the vehicle compartment or of tampering with the motor vehicle in general, that consists in the periodical check made by means of the detection devices 3 connected to the operating and control unit 2.

In the event of the theft or undesired access to the motor vehicle being detected, the method envisages:
- the emission of an acoustic alarm signal by means of the electric siren 4; and
- the sending of an alarm signal ALR towards the remote control unit 7 by means of the transmission/receiver system 6 operating with mobile phone protocols.

In particular, the alarm signal ALR sent comprises a univocal identification code of the motor vehicle.

The method according to the invention can also comprise a phase of location of the position of the motor vehicle by means of the locating unit 9, before the sending of the alarm signal ALR.

In this case, besides the identification code, the alarm signal ALR comprises the geographic coordinates of the motor vehicle, thereby making it possible to identify the motor vehicle after the theft.

Advantageously, the method envisages the periodical check of the radio connection between the transmission/receiver system 6 and the remote control unit 7.

Such check can be made periodically, at preset time intervals.

In a particular embodiment of the method according to the invention, the check phase envisages:
- the sending of a request signal by means of the transmission/receiver system 6 towards the remote control unit 7; and
- the receiving of a confirmation signal by means of the transmission/receiver system 6, in which such confirmation signal is sent by the remote control unit 7 following the receiving of the request signal.

Alternatively, the confirmation signal can be sent by the remote control unit 7 automatically and at preset time intervals.

In the event of there being no connection between the transmission/receiver system 6 and the remote control unit 7, the method comprises the transmission of the alarm signal by means of the short-range transmission/receiver unit 10, which operates outside any disturbed frequencies and allows a short-range transmission of the alarm signal towards one or more different apparatus 1 installed on other motor vehicles in the vicinity and, afterwards, the sending towards the remote control unit 7.

The method in fact envisages the receiving of an alarm signal from the short-range transmission/receiver unit 10 installed on another motor vehicle and the sending of such received ALR alarm signal towards the remote control unit 7, by means of the transmission/receiver system 6.

It has in fact been ascertained how the described invention achieves the proposed objects and in particular the fact is underlined that, in case of theft or breaking into the motor vehicle, the presence of the short-range and low-frequency short-range transmission/receiver unit ensures the transmission of the alarm signal even in the case of use of devices for disturbing the signals sent according to mobile phone standards.

The invention thus conceived is susceptible to numerous modifications and variations, all of which falling within the scope of the inventive concept. Furthermore all the details can be replaced with others that are technically equivalent.

In practice, the materials used, as well as the contingent shapes and dimensions, may be any according to requirements without because of this moving outside the protection scope of the following claims.

## Claims

1. Signalling apparatus (1) for anti-theft systems of motor vehicles or the like, comprising at least an operating and control unit (2) installable on a motor vehicle and associable with at least a detection device (3) of the theft of or undesired access into said motor vehicle, radio wave communication means (5) associated with said operating and control unit (2) and suitable for sending at least an alarm signal (ALR) towards at least a remote control unit (7) in case of detested theft or undesired access, wherein said communication means (5) comprise a transmission/receiver system (6) operating with mobile phone protocols and at least a short-range transmission/receiver unit (10), and checking means for checking the connection between said transmission/receiver system (6) and at least a remote control unit (7), wherein in case of absence of connection between said transmission/receiver system (6) and said remote control unit (7), said alarm signal (ALR) is transmitted by means of said short-range transmission/receiver unit (10), **characterized in that** said checking by the checking means comprises the receiving of at least a confirmation signal by means of said transmission/receiver system (6) from said remote control unit (7), wherein said receiving of the confirmation signal is made periodically and is sent by the remote control unit (7) automatically at preset time intervals, or following a request signal sent from said transmission/receiver system (6) towards said remote control unit (7).

2. Apparatus (1) according to claim 1, **characterised in that** said short-range transmission/receiver unit (10) operates outside any disturbed frequencies for a short-range transmission of the alarm signal (ALR) towards one or more different apparatus (1) even in the case of use of devices for disturbing the signals sent according to mobile phone standards.

3. Apparatus (1) according to claim 2, **characterised in that** said short-range transmission/receiver unit (10) operates within the band of frequencies from 315 MHz to 869 MHz.

4. Apparatus (1) according to one or more of the preceding claims, **characterised in that** it is associable with at least a position locating unit of said motor vehicle.

5. Apparatus (1) according to one or more of the claims from 1 to 3, **characterised in that** it comprises at least a position locating unit (9) of said motor vehicle.

6. Apparatus (1) according to one or more of the preceding claims, **characterised in that** said alarm signal (ALR) comprises an identification code of said motor vehicle.

7. Apparatus (1) according to claim 4 or 5, **characterised in that** said alarm signal (ALR) comprises the geographical coordinates of said motor vehicle.

8. Apparatus (1) according to one or more of the preceding claims, **characterised in that** said operating and control unit (2) is associable with at least an electric siren (4) suitable for emitting an acoustic alarm signal.

9. Signalling method for anti-theft systems of motor vehicles or the like, comprising the phases of:
- detection of the theft of or undesired access into a motor vehicle;
- sending of at least an alarm signal (ALR) towards at least a remote control unit (7), by means of a transmission/receiver system (6) operating with mobile phone protocols;
- checking the connection between said transmission/receiver system (6) and said remote control unit (7);
- in case of absence of connection between said transmission/receiver system (6) and said remote control unit (7), said sending phase comprises the transmission of said alarm signal (ALR) by means of a short-range transmission/receiver unit (10)
**characterized in that** said checking phase comprises the receiving of at least a confirmation signal from said remote control unit (7), wherein said receiving of the confirmation signal is made periodically, at preset time interval, or following a request signal sent from said transmission/receiver system (6) towards said remote control unit (7).

10. Method according to claim 9, **characterised in that** said short-range transmission/receiver unit (10) operates outside any disturbed frequencies for a short-range transmission of the alarm signal (ALR) towards one or more different apparatus (1) even in the case of use of devices for disturbing the signals sent according to mobile phone standards.

11. Method according to the claim 9 or 10, **characterised in that** said short-range transmission/receiver unit (10) operates within the band of frequencies from 315 MHz to 869 MHz.

12. Method according to one or more of the claims from 9 to 11, **characterised in that** said alarm signal (ALR) comprises an identification code of said motor vehicle.

13. Method according to one or more of the claims from 9 to 12, **characterised in that** said alarm signal (ALR) comprises the geographical coordinates of said motor vehicle.

14. Method according to one or more of the claim from 9 to 13, **characterised in that** it comprises the emission of an acoustic alarm signal.

15. method according to one or more of the claims from 9 to 14, **characterised in that** it comprises the receiving of an alarm signal (ALR) from the short-range transmission/receiver unit (10) installed on another motor vehicle and the sending of said received alarm signal (ALR) towards said remote control unit (7), by means of said transmission/receiver system (6) operating with mobile phone protocols.

## Patentansprüche

1. Warnapparat (1) für Diebstahlsicherungssysteme von Kraftfahrzeugen oder Ähnlichem, mit mindestens einer Betriebs- und Steuerungseinheit (2), die in ein Kraftfahrzeug installierbar und mit mindestens einer Vorrichtung (3) zum Erkennen des Diebstahls oder des unerwünschten Einstiegs in das Kraftfahrzeug verbindbar ist, einer Funkwellenkommunikationseinrichtung (5), die mit der Betriebs- und Steuerungseinheit (2) verbunden und geeignet ist, im Fall eines erkannten Diebstahls oder eines unerwünschten Einstiegs mindestens ein Alarmsignal (ALR) in Richtung mindestens einer Fernsteuerungseinheit (7) zu senden, wobei die Kommunikationseinrichtung (5) ein mit Mobilfunkprotokollen arbeitendes Sende-/Empfängersystem (6) und mindestens eine Sende-/Empfängereinheit (10) für den Nahbereich und eine Kontrolleinrichtung zum Kontrollieren der Verbindung zwischen dem Sende-/Empfängersystem (6) und mindestens einer Fernsteuerungseinheit (7) aufweist, wobei im Fall des Fehlens einer Verbindung zwischen dem Sende-/Empfängersystem (6) und der Fernsteuerungseinheit (7) das Alarmsignal (ALR) mittels der Sende-/Empfängereinheit (10) für den Nahbereich übertragen wird, **dadurch gekennzeichnet, dass** das Kontrollieren durch die Kontrolleinrichtung das Empfangen mindestens eines Bestätigungssignals mittels des Sende-/Empfängersystems (6) von der Fernsteuerungseinheit (7) beinhaltet, wobei das Empfangen des Bestätigungssignals periodisch durchgeführt wird und durch die Fernsteuerungseinheit (7) automatisch in voreingestellten Zeitabständen oder nach einem von dem Sende-/Empfängersystem (6) in Richtung der Fernsteuerungseinheit (7) gesendeten Anforderungssignal gesendet wird.

2. Apparat (1) nach Anspruch 1, **dadurch gekennzeichnet, dass** die Sende-/Empfängereinheit (10) für den Nahbereich bei einer Nahbereichsübertragung des Alarmsignals (ALR) in Richtung eines oder mehr verschiedener Apparate (1) sogar in dem Fall außerhalb jeglicher gestörter Frequenzen arbeitet, dass Geräte zum Stören der nach Mobilfunkstandards gesendeten Signale eingesetzt werden.

3. Apparat (1) nach Anspruch 2, **dadurch gekennzeichnet, dass** die Sende-/Empfängereinheit (10) für den Nahbereich innerhalb des Frequenzbereichs von 315 MHz bis 869 MHz arbeitet.

4. Apparat (1) nach einem oder mehr der vorangegangenen Ansprüche, **dadurch gekennzeichnet, dass** er mit mindestens einer Positionsbestimmungseinheit des Kraftfahrzeugs verbindbar ist.

5. Apparat (1) nach einem oder mehr der Ansprüche 1 bis 3, **dadurch gekennzeichnet, dass** er mindestens eine Positionsbestimmungseinheit (9) des Kraftfahrzeugs aufweist.

6. Apparat (1) nach einem oder mehr der vorangegangenen Ansprüche, **dadurch gekennzeichnet, dass** das Alarmsignal (ALR) eine Kennung des Kraftfahrzeugs aufweist.

7. Apparat (1) nach Anspruch 4 oder 5, **dadurch gekennzeichnet, dass** das Alarmsignal (ALR) die geografischen Koordinaten des Kraftfahrzeugs aufweist.

8. Apparat (1) nach einem oder mehr der vorangegangenen Ansprüche, **dadurch gekennzeichnet, dass** die Betriebs- und Steuerungseinheit (2) mit mindestens einer elektrischen Sirene (4), die geeignet ist, ein akustisches Alarmsignal auszusenden, verbindbar ist.

9. Warnverfahren für Diebstahlsicherungssysteme von Kraftfahrzeugen oder Ähnlichem, das folgende Phasen beinhaltet:
- Erkennen des Diebstahls oder des unerwünschten Einstiegs in ein Kraftfahrzeug;
- Senden mindestens eines Alarmsignals (ALR) in Richtung mindestens einer Fernsteuerungseinheit (7) mittels eines Sende-/Empfängersystems (6), das mit Mobilfunkprotokollen arbeitet;
- Kontrollieren der Verbindung zwischen dem Sende-/Empfängersystem (6) und der Fernsteuerungseinheit (7);
- im Fall des Fehlens einer Verbindung zwischen dem Sende-/Empfängersystem (6) und der Fernsteuerungseinheit (7) weist die Sendephase die Übertragung des Alarmsignals (ALR) mittels einer Sende-/Empfängereinheit (10) für den Nahbereich auf,
**dadurch gekennzeichnet, dass** die Kontrollphase das Empfangen mindestens eines Bestätigungssignals von der Fernsteuerungseinheit (7) beinhaltet, wobei das Empfangen des Bestätigungssignals periodisch, in voreingestellten zeitabständen oder nach einem von dem Sende-/Empfängersystem (6) in Richtung der Fernsteuerungseinheit (7) gesendeten Anforderungssignal durchgeführt wird.

10. Verfahren nach Anspruch 9, **dadurch gekennzeichnet, dass** die Sende-/Empfängereinheit (10) für den Nahbereich bei einer Nahbereichsübertragung des Alarmsignals (ALR) in Richtung eines oder mehr verschiedener Apparate (1) sogar in dem Fall außerhalb jeglicher gestörter Frequenzen arbeitet, dass Geräte zum Stören der nach Mobilfunkstandards gesendeten Signale eingesetzt werden.

11. Verfahren nach Anspruch 9 oder 10, **dadurch gekennzeichnet, dass** die Sende-/Empfängereinheit (10) für den Nahbereich innerhalb des Frequenzbereichs von 315 MHz bis 869 MHz arbeitet.

12. Verfahren nach einem oder mehr der Ansprüche 9 bis 11, **dadurch gekennzeichnet, dass** das Alarmsignal (ALR) eine Kennung des Kraftfahrzeugs aufweist.

13. Verfahren nach einem oder mehr der Ansprüche 9 bis 12, **dadurch gekennzeichnet, dass** das Alarmsignal (ALR) die geografischen Koordinaten des Kraftfahrzeugs aufweist.

14. Verfahren nach einem oder mehr der Ansprüche 9 bis 13, **dadurch gekennzeichnet, dass** es die Aussendung eines akustischen Alarmsignals beinhaltet.

15. Verfahren nach einem oder mehr der Ansprüche 9 bis 14, **dadurch gekennzeichnet, dass** es das Empfangen eines Alarmsignals (ALR) von der Sende-/Empfängereinheit (10) für den Nahbereich, die in einem anderen Kraftfahrzeug installiert ist, und das Senden des empfangenen Alarmsignals (ALR) in Richtung der Fernsteuerungseinheit (7) mittels des mit Mobilfunkprotokollen arbeitenden Sende-/Empfängersystems (6) beinhaltet.

## Revendications

1. Dispositif de signalisation (1) pour systèmes antivol de véhicules à moteur ou similaires, comprenant au moins une unité de commande et de contrôle (2) installable sur un véhicule à moteur et associable à au moins un dispositif de détection (3) d'un vol ou d'une intrusion dans ledit véhicule à moteur, des moyens (5) de communication par onde radio associés à ladite unité de commande et de contrôle (2) et aptes à envoyer au moins un signal d'alarme (ALR) en direction d'au moins une unité de télécommande (7) dans le cas où un vol ou une intrusion est détectée, dans lequel lesdits moyens de communication (5) comprennent un système d'émission/réception (6) opérant sous des protocoles de téléphonie mobile, et au moins une unité d'émission/réception à courte portée (10), et des moyens de vérification de la connexion entre ledit système d'émission/réception (6) et au moins une unité de télécommande (7), dans lequel, en cas d'absence de connexion entre ledit système d'émission/réception (6) et ladite unité de télécommande (7), ledit signal d'alarme (ALR) est transmis au moyen de ladite unité d'émission/réception à courte portée (10), ***caractérisé en ce que*** ladite vérification par les moyens de vérification comprend la réception, au moyen dudit système d'émission/réception (6), d'au moins un signal de confirmation en provenance de ladite unité de télécommande (7), dans lequel ladite réception du signal de confirmation est faite périodiquement et est envoyée automatiquement par l'unité de télécommande (7) à intervalles de temps prédéterminés, ou à la suite d'un signal de demande envoyé depuis ledit système d'émission/réception (6) en direction de ladite unité de télécommande (7).

2. Dispositif (1) selon la revendication 1, ***caractérisé en ce que*** ladite unité d'émission/réception à courte portée (10) opère hors de toutes fréquences perturbées pour une émission à courte portée du signal d'alarme (ALR) en direction d'un ou plusieurs dispositif(s) différent(s) (1), même dans le cas de l'utilisation de dispositifs pour perturber les signaux envoyés selon des standards de téléphonie mobile.

3. Dispositif (1) selon la revendication 2, ***caractérisé en ce que*** ladite unité d'émission/réception à courte portée (10) opère dans la bande de fréquences de 315 MHz à 869 MHz.

4. Dispositif (1) selon l'une ou plusieurs des revendications précédentes, ***caractérisé en ce qu'**il* est associable à au moins une unité de localisation de la position dudit véhicule à moteur.

5. Dispositif (1) selon l'une ou plusieurs des revendications 1 à 3, ***caractérisé en ce qu'**il* comprend au moins une unité (9) de localisation de la position dudit véhicule à moteur.

6. Dispositif (1) selon l'une ou plusieurs des revendications précédentes, ***caractérisé en ce que*** ledit signal d'alarme (ALR) comprend un code d'identification dudit véhicule à moteur.

7. Dispositif (1) selon la revendication 4 ou 5, ***caractérisé en ce que*** ledit signal d'alarme (ALR) comprend les coordonnées géographiques dudit véhicule à moteur.

8. Dispositif (1) selon l'une ou plusieurs des revendications précédentes, ***caractérisé en ce que*** ladite unité de commande et de contrôle (2) est associable à au moins une sirène électrique (4) apte à émettre un signal d'alarme sonore.

9. Procédé de signalisation pour systèmes antivol de véhicules à moteur ou similaires, comprenant les étapes de :
- détection du vol ou de l'intrusion dans un véhicule à moteur ;
- envoi d'au moins un signal d'alarme (ALR) en direction d'au moins une unité de télécommande (7), au moyen d'un système d'émission/réception (6) opérant sous des protocoles de téléphonie mobile ;
- vérification de la connexion entre ledit système d'émission/réception (6) et ladite unité de télécommande (7) ;
- en cas d'absence de connexion entre ledit système d'émission/réception (6) et ladite unité de télécommande (7), ladite étape d'envoi comprend l'émission dudit signal d'alarme (ALR) au moyen d'une unité d'émission/réception à courte portée (10)
***caractérisé en ce que*** ladite étape de vérification comprend la réception d'au moins un signal de confirmation en provenance de ladite unité de télécommande (7), ladite réception du signal de confirmation étant faite périodiquement, à intervalles de temps prédéterminés, ou à la suite d'un signal de demande envoyé depuis ledit système d'émission/réception (6) en direction de ladite unité de télécommande (7).

10. Procédé selon la revendication 9, ***caractérisé en ce que*** ladite unité d'émission/réception à courte portée (10) opère hors de toutes fréquences perturbées pour une émission à courte portée du signal d'alarme (ALR) en direction d'un ou plusieurs dispositif(s) différent(s) (1), même dans le cas de l'utilisation de dispositifs pour perturber les signaux envoyés selon des standards de téléphonie mobile.

11. Procédé selon la revendication 9 ou 10, ***caractérisé en ce que*** ladite unité d'émission/réception à courte portée (10) opère dans la bande de fréquences de 315 MHz à 869 MHz.

12. Procédé selon l'une ou plusieurs des revendications 9 à 11, ***caractérisé en ce que*** ledit signal d'alarme (ALR) comprend un code d'identification dudit véhicule à moteur.

13. Procédé selon l'une ou plusieurs des revendications 9 à 12, ***caractérisé en ce que*** ledit signal d'alarme (ALR) comprend les coordonnées géographiques dudit véhicule à moteur.

14. Procédé selon l'une ou plusieurs des revendications 9 à 13, ***caractérisé en ce qu'**il* comprend l'émission d'un signal d'alarme sonore.

15. Procédé selon l'une ou plusieurs des revendications 9 à 14, ***caractérisé en ce qu'**il* comprend la réception d'un signal d'alarme (ALR) en provenance de l'unité d'émission/réception à courte portée (10) installée sur un autre véhicule à moteur et l'envoi dudit signal d'alarme reçu (ALR) en direction de ladite unité de télécommande (7), ceci au moyen dudit système d'émission/réception (6) opérant sous des protocoles de téléphonie mobile.
